# EUROPÄISCHE PATENTSCHRIFT

(11) **EP 1 052 006 B1**
(45) Veröffentlichungstag und Bekanntmachung des Hinweises auf die Patenterteilung: **15.09.2004**
(21) Anmeldenummer: 00109309.5
(22) Anmeldetag: 29.04.2000
(51) Int. Cl.: B01D 19/04, C10M 171/00

(54) **Verwendung wasserunlöslicher Polyoxyalkylen-Polysiloxan-Blockmischcopolymerisate zur Entschäumung wässriger Medien**
Use of water-insoluble polyoxyalkylene-polysiloxane mixed block copolymers for defoaming aqueous media
Utilisation de copolymères blocs mixtes polyoxyalkylène-polysiloxane insolubles dans l'eau dans le démoussage de systèmes aqueux

(30) Priorität: 14.05.1999 DE 19922352
(43) Veröffentlichungstag der Anmeldung: 15.11.2000
(73) Patentinhaber: Goldschmidt AG, 45127 Essen (DE)
(72) Erfinder: Ebbrecht, Thomas, Dr., 44892 Bochum (DE); Josten, Wolfgang, Dr., 53639 Königswinter (DE); Keup, Michael, Dr., 45147 Essen (DE); Silber, Stefan, Dr., 47804 Krefeld (DE); Sucker, Roland, 59368 Werne (DE)

(56) Entgegenhaltungen:
- EP-A- 0 663 225
- US-A- 3 763 021
- US-A- 3 785 935
- US-A- 5 032 662
- US-A- 5 804 099

## Beschreibung

Die Erfindung betrifft die Verwendung wasserunlöslicher Polyoxyalkylen-Polysiloxan-Blockmischcopolymerisate zur Entschäumung wäßriger Medien.

In vielen technischen Prozessen werden in wäßrigen Formulierungen grenzflächenaktive Substanzen eingesetzt, um zum Beispiel wasserunlösliche Stoffe zu emulgieren oder die Grenzflächenspannung zu verringern und so ein besseres Benetzungsverhalten zu erzielen. Als unerwünschte Begleiterscheinung bewirken diese grenzflächenaktiven Substanzen aber, daß bei Herstellung und Verarbeitung solcher wasserbasierender Formulierungen eingebrachte Luft als Schaum stabilisiert wird. Beispiele für Prozesse, in denen solche Probleme auftreten, sind unter anderem Papierfertigung, Abwasseraufbereitung, Emulsionspolymerisation und die Fertigung und Applikation von wasserverdünnbaren Beschichtungssystemen.

Solcher Schaum, der bei Rühr- oder Dispergiervorgängen während Fertigung oder Abfüllung entsteht, verlängert Produktionszeiten und vermindert das Effektivvolumen der Produktionsanlagen. Bei der Applikation von Lacken stört Schaum, da dieser zu unerwünschten Oberflächendefekten führt. Daher ist der Einsatz von Antischaummitteln oder Entschäumern in nahezu allen wasserbasierenden Systemen weit verbreitet und oft unerläßlich.

In der Vergangenheit sind eine Vielzahl an Formulierungen beschrieben worden, die den Einsatz von zum Beispiel Silikonölen, organomodifizierten Siloxanen, hydrophoben Polyoxyalkylenen, Mineralölen, nativen Ölen und anderen hydrophoben Flüssigkeiten als entschäumende Substanzen vorsehen. Häufig werden auch Kombinationen der oben genannten Substanzen mit hydrophoben Feststoffen, wie zum Beispiel Kieselsäuren, Metallstearaten oder Fettsäureamiden eingesetzt, die vielfach den schaumhemmenden oder entschäumenden Effekt verstärken.

Nach derzeitigem Stand des Wissens ist für die entschäumende Wirkung entscheidend, daß ein Entschäumer in die Schaumlamellen hineinpenetrieren kann und diese damit schwächt, bis sie zerplatzen (vgl. K. Koczo, J.K. Koczone, D.T. Wasan, J. Colloid Interface Sci. 166, 225-238 (1994)). Um dies zu erreichen, ist eine kontrollierte Inkompatibilität (Hydrophobie) mit der zu entschäumenden wäßrigen Phase notwendig. Denn wenn ein Entschäumer zu kompatibel (hydrophil) ist, wird er nicht sehr wirksam sein können, da er nicht bevorzugt in die Schaumlamelle eindringt. Bei zu großer Inkompatibilität ist die Entschäumung im Regelfall zwar sehr gut, aber nicht selten treten dann als unerwünschte Nebeneffekte Oberflächenstörungen, Beeinträchtigungen im Benetzungsverhalten und Separationserscheinungen auf.

Somit ist die Suche nach einem geeigneten Entschäumer stets eine Suche nach der richtigen Inkompatibilitäts/Kompatibilitätsbalance für das zu entschäumende System, mit dem Ziel, daß das angestrebte Hydrophobie/Hydrophiliegleichgewicht möglichst optimal erreicht wird.

Um dieses Gleichgewicht besonders variabel einstellen zu können, haben sich in der Vergangenheit Polyoxyalkylen-Polysiloxan-Blockmischcopolymerisate als geeignet herausgestellt, wie dies unter anderem in US-A-3 763 021 beschrieben ist.

Man macht sich bei Verwendung der Polyoxyalkylen-Polysiloxan-Blockmischcopolymerisate zunutze, daß die Polysiloxanblöcke gezielt mit Polyoxyalkyleneinheiten modifiziert werden können, die durch ihre Zusammensetzung aus hydrophilen und hydrophoben Polyoxyalkyleneinheiten im Zusammenspiel mit dem Polysiloxanblock an das oben erwähnte gewünschte Hydrophobie/Hydrophiliegleichgewicht angepaßt werden können.

Dem Stand der Technik, als ein Beispiel sei hier DE-C-10 12 602 genannt, entsprechen Polyoxyalkylen-Polysiloxan-Blockmischcopolymerisate, in denen der Polyoxyalkylenblock als (CₙH₂ₙO)ₓ definiert ist. Der Index n ist dabei eine ganze Zahl von 2 bis 4, wobei wesentlich ist, daß diese Polyoxyalkylenblöcke als gemeinsames Strukturelement stets -CH₂- CHR- O- Gruppen enthalten, wobei R einem Wasserstoffatom, einer Methylgruppe oder einer Ethylgruppe entsprechen kann. Solche Polyoxyalkylenblöcke werden durch ionische Polymerisation von Oxiranderivaten, wie Ethylenoxid, Propylenoxid und Butylenoxid hergestellt. Die Gründstruktur der eigenschaftsbestimmenden Polyoxyalkylenkette ist aber durch die Kombination von im Regelfall nur zwei verschiedenen Polyoxyalkylenbausteinen in einer Polyoxyalkylenkette gekennzeichnet. Typischerweise werden in den dem Stand der Technik entsprechenden Polyoxyalkylen-Polysiloxan-Blockmischcopolymerisaten Polyoxyethylene und Polyoxypropylene eingesetzt.

Durch Variation der Oxyalkylenbausteine, insbesondere durch Veränderung ihres Mengenverhältnisses zueinander und ihrer Abfolge im Polymer (statistisch und/oder blockweise), sind eine große Zahl an Polyoxyalkylen-Polysiloxan-Blockmischcopolymerisaten erhältlich.

Bis heute ist es aber in vielen Fällen nicht gelungen, bei Beschränkung auf nur zwei Polyoxyalkylenbausteine die für bestimmte Entschäumer notwendige optimale Inkompatibilitäts/Kompatibilitätsbalance zu finden. Dies insbesondere dann nicht, wenn eine statistische Verteilung derselben zugelassen wird.

Der vorliegenden Erfindung liegt somit die Aufgabe zugrunde, für die Entschäumung wäßriger Medien besonders geeignete Polyoxyalkylen-Polysiloxan-Blockmischcopolymerisate bereitzustellen, die es ermöglichen, die oben beschriebene gewünschte Inkompatibilitäts/Kompatibilitätsbalance, besser als bislang machbar, gezielt einzustellen.

Diese Aufgabe wird überraschenderweise durch die Verwendung wasserunlöslicher Polyoxyalkylen-Polysiloxan-Blockmischcopolymerisate zur Entschäumung wäßriger Medien der allgemeinen durchschnittlichen Formel I gelöst: 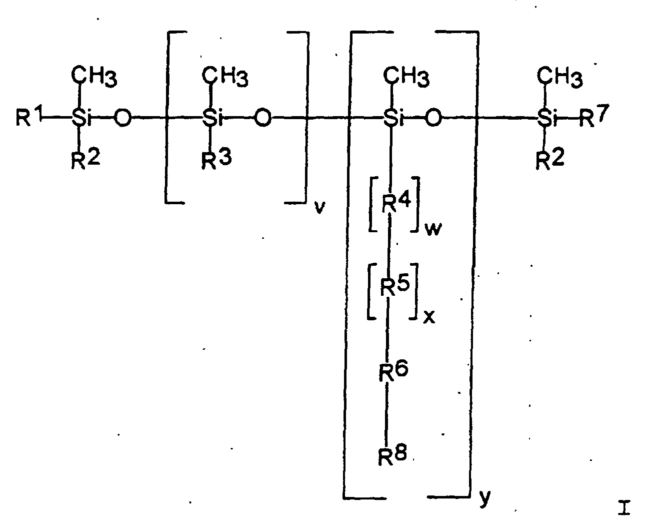 wobei
R¹ und/oder R⁷ gleich R² oder -[R⁴]_{w}-[R⁵]ₓ-[R⁶]-R⁸ sind,
R² und R³ für gleiche oder verschiedene Alkylreste mit 1 bis 24 Kohlenstoffatomen oder gegebenenfalls substituierte Phenylreste mit bis zu 24 Kohlenstoffatomen steht,
R⁴ ein zweiwertiger Rest der Formel -O-, -NH-, -NR²-, -Soder der Formel -[O- Si(CH₃)₂]ᵤ- ist, wobei
u = 2 bis 200 ist,
R⁵ für gleiche oder verschiedene Alkylenreste mit 1 bis 24 Kohlenstoffatomen, oder -CₙH_{2n-f}R²_{f}- O- CₘH_{2m-g}R²_{g}- steht,
wobei
f = 0 bis 12,
g = 0 bis 12,
n = 1 bis 18,
m = 1 bis 18 sind,
R⁶ für gleiche oder verschiedene Reste der allgemeinen Formel -O-(C₂H₄O)ₐ(CH₂-CH(CH₃)O)_{b}(CH₂-CR⁹R¹⁰O)_{c}- steht, wobei
R⁹ und R¹⁰ einen Methylrest bedeuten oder
R⁹ ein Wasserstoffatom und R¹⁰ einen Ethylrest bedeuten, wobei jedoch unter Berücksichtigung aller Reste R⁶ ein Gehalt von 40 Gew.-% an C₂H₄O-Gruppen in der Summe aller Reste R⁶ nicht überschritten wird,
a = 2 bis 30,
b = 2 bis 50,
c = 2 bis 40 sind,
   die Summe (a + b + c) = 6 bis 100 ist
   und die Reihenfolge der einzelnen Polyoxyalkylensegmente -(C₂H₄O)ₐ- und -(CH₂-CH(CH₃)O)_{b}- und -(CH₂-CR⁹R¹⁰O)_{c}- beliebig sein kann und insbesondere Blockcopolymere, wie statistische Polymere sowie deren Kombinationen umfaßt,
R⁸ ein Wasserstoffrest, ein gegebenenfalls substituierter Alkylrest mit 1 bis 6 Kohlenstoffatomen oder ein Acylrest ist,
v = 3 bis 200,
w = 0 oder 1,
x = 0 oder 1,
y = 0 bis 200 sind,
und, wenn y = 0 ist, R¹ und/oder R⁷ gleich -[R⁴]_{w}-[R⁵]ₓ-[R⁶]-R⁸ sind.

In vielen Fällen haben sich Polyoxyalkylen-Polysiloxan-Blockmischcopolymerisate als gut geeignet erwiesen, die durch Kombinationen von zwei oder mehreren Polyoxyalkyleneinheiten mit einem oder mehreren Polysiloxancopolymerisaten erhalten werden. Dabei kann die Unterscheidung im Falle der Polyoxyalkylencopolymeren sowohl eine Unterscheidung in bezug auf den relativen Anteil der für die Herstellung dieses Copolymeren verwendeten Bausteine sein, als auch im Molekulargewicht der ganzen Polyoxyalkyleneinheit, als auch in ihrer Funktionalität begründet liegen.

Verschiedene Polysiloxancopolymere sind unterscheidbar sowohl nach ihrer Molmasse als auch nach ihrem Verzweigungsgrad oder der Anzahl beziehungsweise relativen Stellung der verwendeten reaktiven Gruppen, die für eine Verknüpfung zur Verfügung stehen.

Die erfindungsgemäßen Verbindungen wirken ausdrücklich nicht in dem Sinne, daß sie eine besonders gute Kompatibilisierung zwischen unterschiedlich polaren Bestandteilen einer Mischung bewirken. Es ist vielmehr so, daß sie selbst lediglich gerade so kompatibel sind, daß sie keine unerwünschten Nebeneffekte wie Oberflächenstörungen, Beeinträchtigungen im Benetzungsverhalten und Separationserscheinungen hervorrufen, ohne dabei jedoch für die Kompatibilisierung anderer Inhaltsstoffe zu sorgen.

Für die vorliegende Erfindung ist wesentlich, daß die erfindungsgemäßen Polyoxyalkylen-Polysiloxan-Blockmischcopolymerisete nicht wasserlöslich sind. Dies bedeutet, daß eine 1:1 Mischung (Gew.-%) mit Wasser zu einem nicht homogenen Gemisch der beiden Phasen führt und kein Lösungsvorgang der erfindungsgemäßen Polyoxyalkylen-Polysiloxan-Blockmischcopolymerisate eintritt. Allerdings können herstellungsbedingt, wie unten ausgeführt, geringe Anteile an freien Polyoxyalkylenen in den Polyoxyalkylen-Polysiloxan-Blockmischcopolymerisaten enthalten sein. Da deren Herstellung im wesentlichen statistischen Gesetzen gehorcht, können somit auch besonders oxyethylenreiche Polyoxyalkylene vorkommen, die wiederum in Wasser löslich sein können. Diese Anteile sind jedoch sehr gering und betragen in den erfindungsgemäßen Polyoxyalkylen-Polysiloxan-Blockmischcopolymerisaten immer weniger als 10 Gew.-%.

Die erfindungsgemäßen Polyoxyalkylen-Polysiloxan-Blockmischcopolymerisate können gemäß üblicher Methoden, wie sie dem Stand der Technik entsprechen, hergestellt werden. Wie dem Fachmann geläufig ist, zählen dazu insbesondere die Hydrosilylierungsreaktion von zusätzlich olefinisch ungesättigten Polyoxyalkylenen mit Wasserstoffpolysiloxanen, wie zum Beispiel in US-A- 3 402 192 beschrieben, oder die nucleophile Substitution von Polyoxyalkylenen mit nucleophilen Gruppen an Polysiloxanen, die zumindest ein mit einer elektronegativen Gruppe substituiertes Siliciumatom enthalten (vgl. zum Beispiel DE-B-11 65 028). Weitere Beschreibungen derartiger Verfahren und Hinweise zur Herstellung geeigneter Polysiloxane finden sich außerdem beispielsweise in W. Noll "Chemie und Technologie der Silicone", Verlag Chemie, Weinheim, 1968.

Die dazu benötigten Polyoxyalkylene können gemäß dem Stand der Technik durch ionische Polymerisation von Ethylenoxid, Propylenoxid, n-Butylenoxid und iso-Butylenoxid gewonnen werden.

Zur Verdeutlichung der beanspruchten Verbindungen werden beispielhaft die folgenden Polysiloxane 1 bis 3 mit den Polyoxyalkylenen 1 bis 8 umgesetzt:

| | |
|---|---|
| **Polysiloxan 1** | (CH₃)₃SiO-[(CH₃)SiO-]₂₀[(CH₃) HSiO-]₅Si(CH₃)₃ |
| **Polysiloxan 2** | (CH₃)₂HSiO-[(CH₃)SiO-]₃₀[(CH₃) HSiO-]₄SiH(CH₃)₂ |
| **Polysiloxan 3** | (CH₃)₂ClSiO-[(CH₃)₂SiO-]₁₃SiCl(CH₃)₂ |
| **Polyoxyalkylen 1** | H₂C=CH-CH₂O-(C₂H₄O-)₄(CH₂CH(C₂H₅)O)₈H |
| **Polyoxyalkylen 2** | H₂C=CH-CH₂O-(C₂H₄O-)₄(CH₂CH(CH₃)O-₁₈H |
| **Polyoxyalkylen 3** | H₂C=CH-CH₂O-(CH₂CH(CH₃)O-)₁₀(CH₂CH(C₂H₅)O)₆H |
| **Polyoxyalkylen 4** | H₂C=CH-CH₂O-(C₂H₄O-)₁₂(CH₂CH(CH₃)O-)₄(CH₂CH(C₂H₅)O)₂H |
| **Polyoxyalkylen 5** | H₂C=CH-CH₂O-(C₂H₄O-)₄(CH₂CH(CH₃)O-)₁₀(CH₂CH(C₂H₅)O)₆H |
| **Polyoxyalkylen 6** | H₃C-CH₂-CH₂-CH₂O-(C₂H₄O-)₄(CH₂CH(CH₃)O-)₁₈H |
| **Polyoxyalkylen 7** | H₃C-CH₂-CH₂-CH₂O-(C₂H₄O-)₁₂(CH₂CH(CH₃)O-)₄(CH₂CH(C₂H₅)O)₂H |
| **Polyoxyalkylen 8** | H₃C-CH₂-CH₂-CH₂O-(C₂H₄O-)₄(CH₂CH(CH₃)O-)₁₀(CH₂CH(C₂H₅)O)₆H |

Dem Fachmann ist geläufig, daß die Verbindungen in Form von Mischungen ihrer Homologen anfallen und die angegebenen Indizes Durchschnittswerte darstellen.

Entsprechend der nachstehenden Tabelle werden folgende Polyoxyalkylen-Polysiloxan-Blockmischcopolymerisate erhalten:

| **Beispiel** | **Siloxan** | **Polyoxyalkylen** | | **erfindungsgemäß ja/nein** |
|---|---|---|---|---|
| | | **(val%)** | **(val%)** | |
| **1** | 1 | 1 (100) | - | nein |
| **2** | 1 | 2 (100) | - | nein |
| **3** | 1 | 3 (100) | - | nein |
| **4** | 1 | 4 (100) | - | nein |
| **5** | 1 | 5 (100) | - | ja |
| **6** | 2 | 1 (100) | - | nein |
| **7** | 2 | 2 (100) | - | nein |
| **8** | 2 | 3 (100) | - | nein |
| **9** | 2 | 4 (100) | - | nein |
| **10** | 2 | 5 (100) | - | ja |
| **11** | 2 | 5 (50) | 4 (50) | ja |
| **12** | 3 | 6 (100) | - | nein |
| **13** | 3 | 7 (100) | - | nein |
| **14** | 3 | 8 (100) | - | ja |
| **15** | 3 | 8 (50) | 7 (50) | ja |

Die Herstellung der Beispiele 1 bis 11 erfolgte gemäß literaturüblicher Verfahren wie zum Beispiel in DE-B-11 65 028 beschrieben, die Herstellung der Beispiele 12 bis 15 erfolgte gemäß literaturüblicher Verfahren wie zum Beispiel in US-A-2 846 458 beschrieben.

Dem Fachmann ist geläufig, daß bei dieser dem Stand der Technik entsprechenden Herstellweise noch freies Polyoxyalkylen in den Polyoxyalkylen-Polysiloxan-Blockmischcopolymerisaten enthalten sein kann. Im Regelfall stört dieses nicht und muß für die weitere Verwendung der Verbindungen nicht entfernt werden.

Für den Einsatz als Entschäumer werden die erfindungsgemäßen wasserunlöslichen Polyoxyalkylen-Polysiloxan-Blockmischcopolymerisate vorteilhaft wie folgt formuliert:
a) 72 bis 85 Gew.-% der Polyoxyalkylen-Polysiloxan-Blockmischcopolymerisate
b) 15 bis 28 Gew.-% eines nichtionischen Ethoxylates mit einem HLB-Wert von 8 bis 12 und
c) 0,1 bis 10 Gew.-% mit Bezug auf die Summe a) + b) einer anorganischen oder organischen festen Substanz.

Beispiele für nichtionische Ethoxylate mit einem HLB-Wert (Hydrophilic/lipophilic balance; Definition gemäß W.C. Griffin; J. Soc. Cosmet. Chem., Band 5, Seite 249, 1954) von 8-12 sind Fettsäureester polyvalenter Alkohole, deren Polyethylenglykolderivate, Polyglykolderivate von Fettsäuren und Fettalkoholen, Alkylphenolethoxylate und Blockcopolymere aus Ethylenoxid und Propylenoxid (Pluronics). Bevorzugt werden Ethoxylate von Rohstoffen, erhältlich aus natürlichen Fetten, insbesondere Oleyl- und Stearylderivate.

Beispiele der anorganischen oder organischen festen Substanz sind Kieselsäuren, Aluminiumoxid, Erdalkalimetallcarbonate, Erdalkalimetallsalze langkettiger Fettsäuren, deren Amide und Harnstoffderivate. Diese können nach bekannten Methoden noch zusätzlich hydrophobiert sein.

Die oben beschriebenen formulierten Entschäumer können pur oder in Form ihrer wäßrigen Emulsionen verwendet werden. Emulsionen werden häufig bevorzugt eingesetzt, da diese besser zu dosieren sind. Dabei sind Entschäumeremulsionen, deren mittlerer Teilchendurchmesser zwischen 1 und 10 µm liegt, besonders bevorzugt. Solche Emulsionen enthalten dann zwischen 5 und 50 Gew.-% der erfindungsgemäßen wasserunlöslichen Polyoxyalkylen-Polysiloxan-Blockmischcopolymerisate.

Die anwendungstechnische Überprüfung erfolgt in Dispersionsfarben, denen Entschäumer üblicherweise in Mengen von 0,01 bis 0,5 Gew.-% bezogen auf die Dispersionsfarbe zugesetzt wird.

Folgende Formulierungen wurden hergestellt und geprüft:

| **Formulierung** | **Polyoxyalkylen-Polysiloxan- Blockcopolymerisat aus Beispiel** | **erfindungsgemäß ja/nein** |
|---|---|---|
| **1** | 1 | nein |
| **2** | 2 | nein |
| **3** | 3 | nein |
| **4** | 4 | nein |
| **5** | 5 | ja |
| **6** | 6 | nein |
| **7** | 7 | nein |
| **8** | 8 | nein |
| **9** | 9 | nein |
| **10** | 10 | ja |
| **11** | 11 | ja |
| **12** | 12 | nein |
| **13** | 13 | nein |
| **14** | 14 | ja |
| **15** | 15 | ja |

Die Formulierungen 1 bis 15 setzen sich wie folgt zusammen: 75 Gew.-% Polyoxyalkylen-Polysiloxan-Blockmischcopolymerisat gemäß Beispiel 1 bis 15
20 Gew.-% Oleylethoxylat mit HLB 10
5 Gew.-% Kieselsäure

In folgenden Dispersionsfarben wurde geprüft:

### Dispersionsfarbe 1 (alle Angaben in Gew.-%)

| | | |
|---|---|---|
| Propylenglykol | 4,7 | |
| Collacral® AS 35 | 5,0 | BASF |
| Titandioxid | 23,1 | |
| Mergal® K7 | 0,2 | Riedel de Haen |
| Butylglykol | 2,6 | |
| Dowanol® DPM | 1,3 | Dow |
| Wasser | 6,8 | |
| Acronal® A603 | 52,3 | BASF |
| Rheolate® 278 | 4,0 | Rheox |

### Dispersionsfarbe 2 (alle Angaben in Gew.-%)

| | | |
|---|---|---|
| Wasser | 36,4 | |
| Coatex® P50 | 0,4 | Coatex |
| Calgon® N | 0,1 | BK Ladenburg |
| Mergal® K7 | 0,2 | Riedel de Haen |
| Coatex® BR100 | 2,3 | Coatex |
| Calcidar® Extra | 22,1 | Omya |
| Titandioxid | 17,5 | |
| Finntalc® M15 | 4,7 | |
| NaOH, 10 % | 0,1 | |
| Acronal® 290D | 16,2 | BASF |

Die Dispersionsfarben wurden gemäß dem Stand der Technik formuliert. Alle Rohstoffe wurden ohne weitere Reinigung eingesetzt. Zum Schluß wurden,0,06 Gew.-% Entschäumer (Formulierung 1 bis 15) zugesetzt und 1 Minute bei 1000 U/min eingerührt.

Es wurde ein sogenannter Rollentest durchgeführt, dessen Ergebnis in den nachfolgenden Tabellen abgebildet ist. Der Rollentest ermöglicht einerseits einen praxisnahen Vergleich und bietet andererseits die Möglichkeit einer vernünftigen Differenzierung unterschiedlicher Formulierungen.

Beim Rollentest werden mittels einer offenporigen Schaumrolle 40 Gramm der zu untersuchenden Dispersionsfarbe auf einer nicht saugenden Prüfkarte mit einer Gesamtfläche von 500 cm² verteilt. Die Schaumstoffrolle wird vor der Farbapplikation mit Wasser benetzt. Es muß sichergestellt werden, daß immer die gleiche zusätzliche Menge Wasser in die vorgelegte Farbe eingebracht wird und damit die Trocknungszeit des Lackes stets gleich bleibt. Die Naßfilmauflage beträgt ca. 300 g/m² Fläche. Nach 24 Stunden Trockenzeit werden die Testkarten nach folgenden Kriterien untersucht:
a) Makroschaum (Zahl der Blasen pro 100 cm²)
b) Mikroschaum (Zahl der Pinholes im Vergleich zu Fotos von Referenzkarten auf einer Skala von 1 (keine bis sehr wenige Pinholes) bis 5 (sehr viele Pinholes))
c) Benetzungsstörungen (keine, schwach, stark)

Die Tests wurden mit Entschäumer versetzten Dispersionsfarben wiederholt, die 6 Wochen bei 50 °C gelagert wurden.

### Ergebnisse Dispersionsfarbe 1:

| **Formulierung** | **Makroschaum** | | **Mikroschaum** | | **Benetzungsstörungen** | |
|---|---|---|---|---|---|---|
| | **sofort** | **6 Wochen** | **sofort** | **6 Wochen** | **sofort** | **6 Wochen** |
| **ohne** | 76 | 78 | 5 | 5 | keine | keine |
| **1** | 1 | 3 | 1 | 1 | keine | schwach |
| **2** | 2 | 4 | 1 | 1 | keine | schwach |
| **3** | 0 | 1 | 1 | 1 | stark | stark |
| **4** | 61 | 70 | 3 | 3 | keine | schwach |
| **5** | 0 | 0 | 1 | 1 | keine | keine |
| **6** | 3 | 6 | 1 | 2 | keine | schwach |
| **7** | 3 | 4 | 1 | 2 | schwach | schwach |
| **8** | 1 | 1 | 1 | 1 | stark | stark |
| **9** | 62 | 69 | 2 | 3 | stark | stark |
| **10** | 0 | 1 | 1 | 1 | keine | keine |
| **11** | 0 | 0 | 1 | 1 | keine | keine |
| **12** | 3 | 4 | 1 | 2 | schwach | schwach |
| **13** | 48 | 31 | 2 | 2 | keine | keine |
| **14** | 0 | 0 | 1 | 1 | keine | keine |
| **15** | 0 | 1 | 1 | 1 | keine | keine |

### Ergebnisse Dispersionsfarbe 2:

| **Formulierung** | **Makroschaum** | | **Mikroschaum** | | **Benetzungsstörungen** | |
|---|---|---|---|---|---|---|
| | **sofort** | **6 Wochen** | **sofort** | **6 Wochen** | **sofort** | **6 Wochen** |
| **ohne** | 51 | 50 | 3 | 4 | keine | keine |
| **1** | 1 | 2 | 1 | 2 | keine | schwach |
| **2** | 1 | 3 | 1 | 1 | keine | schwach |
| **3** | 0 | 2 | 1 | 1 | stark | stark |
| **4** | 41 | 59 | 2 | 3 | schwach | schwach |
| **5** | 0 | 0 | 1 | 1 | keine | keine |
| **6** | 3 | 9 | 1 | 2 | keine | schwach |
| **7** | 4 | 5 | 1 | 2 | schwach | schwach |
| **8** | 0 | 1 | 1 | 1 | stark | stark |
| **9** | 48 | 54 | 2 | 3 | stark | stark |
| **10** | 1 | 1 | 1 | 1 | keine | keine |
| **11** | 0 | 1 | 1 | 1 | keine | keine |
| **12** | 6 | 11 | 2 | 2 | schwach | schwach |
| **13** | 27 | 27 | 2 | 2 | keine | schwach |
| **14** | 0 | 0 | 1 | 1 | keine | keine |
| **15** | 0 | 1 | 1 | 1 | keine | keine |

Es zeigt sich, daß die erfindungsgemäßen Polyoxyalkylen-Polysiloxan-Blockmischcopolymerisate, die in den Formulierungen 5, 10, 11, 14 und 15 enthalten sind, hervorragende Möglichkeiten zur Anpassung ihrer Eigenschaften an die Erfordernisse zur Entschäumung wäßriger Medien bieten. Man kann überraschenderweise besondere Effekte erzielen, wie sie auch mit vergleichbar unlöslichen herkömmlichen Polyoxyalkylen-Polysiloxan-Blockmischcopolymerisaten nicht möglich sind.

## Patentansprüche

1. Verwendung wasserunlöslicher Polyoxyalkylen-Polysiloxan-Blockmischcopolymerisate zur Entschäumung wäßriger Medien der allgemeinen durchschnittlichen Formel I 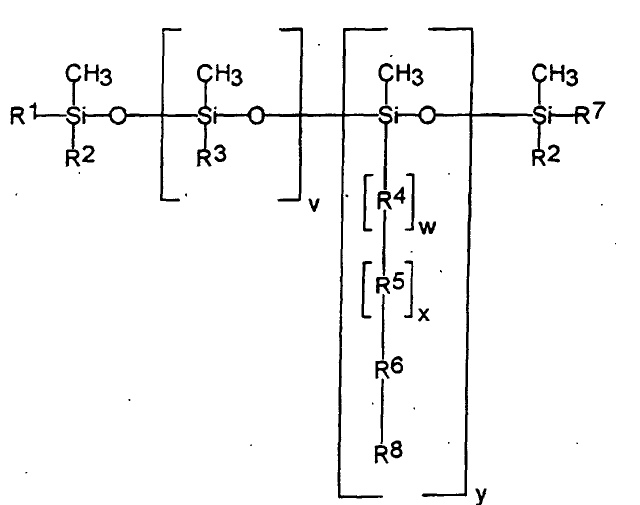 wobei
R¹ und/oder R⁷ gleich R² oder -[R⁴]_{w}-[R⁵]ₓ-[R⁶]-R⁸ sind,
R² und R³ für gleiche oder verschiedene Alkylreste mit 1 bis 24 Kohlenstoffatomen oder gegebenenfalls substituierte Phenylreste mit bis zu 24 Kohlenstoffatomen stehen,
R⁴ ein zweiwertiger Rest der Formel -O-, -NH-, -NR²-, -Soder der Formel -[O-Si(CH₃)₂]ᵤ- ist, wobei
u = 2 bis 200 ist,
R⁵ für gleiche oder verschiedene Alkylenreste mit 1 bis 24 Kohlenstoffatomen, oder -CₙH₂ₙ-_{f}R²_{f}-O-CₘH_{2m-g}R²g- steht, wobei
f = 0 bis 12,
g = 0 bis 12,
n = 1 bis 18,
m = 1 bis 18 sind,
R⁶ für gleiche oder verschiedene Reste der allgemeinen Formel -O-(C₂H₄O)ₐ(CH₂-CH(CH₃)O)_{b}(CH₂-CR⁹R¹⁰O)_{c}- steht, wobei
R⁹ und R¹⁰ einen Methylrest bedeuten, oder
R⁹ ein Wasserstoffatom und R¹⁰ einen Ethylrest bedeuten, wobei jedoch unter Berücksichtigung aller Reste R⁶ ein Gehalt von 40 Gew.-% an C₂H₄O-Gruppen in der Summe aller Reste R⁶ nicht überschritten wird,
a = 2 bis 30,
b = 2 bis 50,
c = 2 bis 40 sind,
die Summe (a + b + c) = 6 bis 100 ist
und die Reihenfolge der einzelnen Polyoxyalkylensegmente -(C₂H₄O)ₐ- und -(CH₂-CH(CH₃)O)_{b}- und -(CH₂-CR⁹R¹⁰O)_{c}- beliebig sein kann und insbesondere Blockcopolymere, wie statistische Polymere sowie deren Kombinationen umfaßt,
R⁸ ein Wasserstoffrest, ein gegebenenfalls substituierter Alkylrest mit 1 bis 6 Kohlenstoffatomen oder ein Acylrest ist,
v = 3 bis 200,
w = 0 oder 1,
x = 0 oder 1,
y = 0 bis 200 sind,
und, wenn y = 0 ist, R¹ und/oder R⁷ gleich - [R⁴]_{w}-[R⁵]ₓ-[R⁶]-R⁸ sind.

2. Verwendung wasserunlöslicher Polyoxyalkylen-Polysiloxan-Blockmischcopolymerisate zur Entschäumung wäßriger Medien gemäß Anspruch 1, wobei mindestens 80 % der Gruppen R² und R³ Methylgruppen sind,
R¹ = R⁷ ist
und die Summe v + y = 8 bis 120 ist.

3. Verwendung wasserunlöslicher Polyoxyalkylen-Polysiloxan-Blockmischcopolymerisate zur Entschäumung wäßriger Medien gemäß den Ansprüchen 1 und 2, wobei die einzelnen Pölyoxyalkyleneinheiten blockweise angeordnet sind.

4. Verwendung wasserunlöslicher Polyoxyalkylen-Polysiloxan-Blockmischcopolymerisate zur Entschäumung wäßriger Medien gemäß den Ansprüchen 1 bis 3, wobei die Poly(oxy-1,2-butandiyl)einheiten blockweise unmittelbar an R⁸ grenzend angeordnet sind.

5. Verwendung wasserunlöslicher Polyoxyalkylen-Polysiloxan-Blockmischcopolymerisate zur Entschäumung wäßriger Medien gemäß den Ansprüchen 1 bis 3, wobei
R¹ = R⁷ = -CH₃ ist,
R⁵ = -(CH₂)₃- ist,
w = 0 und
x = 1 ist.

6. Verwendung wasserunlöslicher Polyoxyalkylen-Polysiloxan-Blockmischcopolymerisate zur Entschäumung wäßriger Medien gemäß den Ansprüchen 1 bis 3, wobei
R¹ = R⁷ = -(CH₂)₃-R⁶-R⁸ ist,
R⁵ = -(CH₂)₃- ist,
w = 0 und
x = 1 ist.

7. Verwendung wasserunlöslicher Polyoxyalkylen-Polysiloxan-Blockmischcopolymerisate zur Entschäumung wäßriger Medien gemäß den Ansprüchen 1 bis 3, wobei
R¹ = R⁷ = -(CH₂)₃-R⁶-R⁸ und
y = 0 ist.

8. Verwendung wasserunlöslicher Polyoxyalkylen-Polysiloxan-Blockmischcopolymerisate zur Entschäumung wäßriger Medien gemäß den Ansprüchen 1 bis 3, wobei
R¹ = R⁷ = -(CH₂)₃-R⁶-R⁸,
R⁴ = -[O-Si(CH₃)₂]ᵤ-,
R⁸ = unverzweigter Alkylrest,
u = 2 bis 6,
w = 1,
x = 0 und
y = 1 bis 6 ist.

9. Verwendung wasserunlöslicher Polyoxyalkylen-Polysiloxan-Blockmischcopolymerisate zur Entschäumung wäßriger Medien gemäß den Ansprüchen 1 bis 3, wobei
R¹ = R⁷= -(CH₂)₃-R⁶-R⁸ ist,
R⁸ = unverzweigter Alkylrest und
y = 0 ist.

10. Verwendung wasserunlöslicher Polyoxyalkylen-Polysiloxan-Blockmischcopolymerisate zur Entschäumung wäßriger Medien gemäß den Ansprüchen 1 bis 8, wobei c = 2 bis 5 ist.

11. Verwendung wasserunlöslicher Polyoxyalkylen-Polysiloxan-Blockmischcopolymerisate zur Entschäumung wäßriger Medien gemäß den Ansprüchen 1 bis 10 **dadurch gekennzeichnet, daß** dem Entschäumer Emulgatoren zugesetzt sind.

12. Verwendung wasserunlöslicher Polyoxyalkylen-Polysiloxan-Blockmischcopolymerisate zur Entschäumung wäßriger Medien gemäß den Ansprüchen 1 bis 11 **dadurch gekennzeichnet, daß** der Entschäumer Festkörper enthält.

13. Verwendung wasserunlöslicher Polyoxyalkylen-Polysiloxan-Blockmischcopolymerisate zur Entschäumung wäßriger Medien gemäß den Ansprüchen 1 bis 12 in Form wäßriger Emulsionen.

14. Verwendung wasserunlöslicher Polyoxyalkylen-Polysiloxan-Blockmischcopolymerisate gemäß den Ansprüchen 1 bis 13 zur Entschäumung von Kühlschmierstoffen.

15. Verwendung wasserunlöslicher Polyoxyalkylen-Polysiloxan-Blockmischcopolymerisate gemäß den Ansprüchen 1 bis 13 zur Entschäumung von Polymerdispersionen.

16. Verwendung wasserunlöslicher Polyoxyalkylen-Polysiloxan-Blockmischcopolymerisate gemäß den Ansprüchen 1 bis 13 zur Entschäumung von Lacken und Druckfarben.

## Claims

1. Use of water-insoluble polyoxyalkylene-polysiloxane block copolymers of the general average formula I 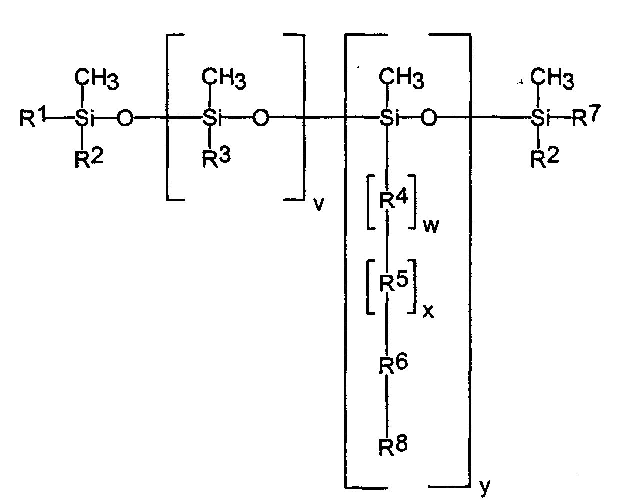 where
R¹ and/or R⁷ are R² or -[R⁴]_{w}-[R⁵]ₓ-[R⁶]-R⁸,
R² and R³ are identical or different alkyl radicals having 1 to 24 carbon atoms or are unsubstituted or substituted phenyl radicals having up to 24 carbon atoms,
R⁴ is a divalent radical of the formula -O-, -NH-, -NR²-or -S- or of the formula -[O-Si(CH₃)₂]ᵤ-, where u is from 2 to 200,
R⁵ is identical or different alkylene radicals having 1 to 24 carbon atoms, or is
-CₙH_{2n-f}R² _{f} -O-CₘH_{2m-g}R² _{g}-,
where
f is from 0 to 12,
g is from 0 to 12,
n is from 1 to 18,
m is from 1 to 18,
R⁶ is identical or different radicals of the general formula
- O-(C₂H₄O)ₐ(CH₂-CH(CH₃)O)_{b}(CH₂-CR⁹R¹⁰O)_{c}-,
where
R⁹ and R¹⁰ are a methyl radical, or R⁹ is a hydrogen atom and R¹⁰ is an ethyl radical, but where, taking into account all radicals R⁶, the proportion of C₂H₄O groups among the total of all radicals R⁶ does not exceed 40% by weight,
a is from 2 to 30,
b is from 2 to 50,
c is from 2 to 40, and
the sum (a + b + c) is from 6 to 100
and the sequence of the individual polyoxyalkylene segments - (C₂H₄O)ₐ- and - (CH₂-CH(CH₃)O)_{b}- and - (CH₂CR⁹R¹⁰O)_{c}- can be as desired and, in particular, embraces block copolymers, such as random polymers and combinations thereof,
R⁸ is a hydrogen, a substituted or unsubstituted alkyl radical having from 1 to 6 carbon atoms, or an acyl radical,
v is from 3 to 200,
w is 0 or 1,
x is 0 or 1,
y is from 0 to 200,
and, if y is 0, R¹ and/or R⁷ are/is -[R⁴]_{w}- [R⁵]ₓ- [R⁶]- R⁸
for defoaming aqueous media.

2. Use of water-insoluble polyoxyalkylene-polysiloxane block copolymers for defoaming aqueous media, according to Claim 1, where at least 80% of the groups R² and R³ are methyl groups,
R¹ = R⁷,
and the sum v + y is from 8 to 120.

3. Use of water-insoluble polyoxyalkylene-polysiloxane block copolymers for defoaming aqueous media, according to either of Claims 1 and 2, where the individual polyoxyalkylene units are arranged in blocks.

4. Use of water-insoluble polyoxyalkylene-polysiloxane block copolymers for defoaming aqueous media, according to any of Claims 1 to 3, where the poly(oxy-1,2-butanediyl) units are arranged in blocks directly adjacent to R⁸.

5. Use of water-insoluble polyoxyalkylene-polysiloxane block copolymers for defoaming aqueous media, according to any of Claims 1 to 3, where
R¹ = R⁷ and is -CH₃,
R⁵ is - (CH₂)₃-,
w is 0, and
x is 1.

6. Use of water-insoluble polyoxyalkylene-polysiloxane block copolymers for defoaming aqueous media, according to any of Claims 1 to 3, where
R¹ = R⁷ and is -(CH₂)₃-R⁶-R⁸,
R⁵ is (CH₂)₃-,
w is 0, and
x is 1.

7. Use of water-insoluble polyoxyalkylene-polysiloxane block copolymers for defoaming aqueous media, according to any of Claims 1 to 3, where
R¹ = R⁷ and is - (CH₂)₃-R⁶-R⁸ and
y is 0.

8. Use of water-insoluble polyoxyalkylene-polysiloxane block copolymers for defoaming aqueous media, according to any of Claims 1 to 3, where
R¹ = R⁷ and is - (CH₂)₃ - R⁶- R⁸,
R⁴ is -[O-Si(CH₃)₂]ᵤ-,
R⁸ is an unbranched alkyl radical,
u is from 2 to 6,
w is 1,
x is 0, and
y is from 1 to 6.

9. Use of water-insoluble polyoxyalkylene-polysiloxane block copolymers for defoaming aqueous media, according to any of Claims 1 to 3, where
R¹ = R⁷ and is -(CH₂)₃-R⁶-R⁸,
R⁸ is an unbranched alkyl radical, and
y is 0.

10. Use of water-insoluble polyoxyalkylene-polysiloxane block copolymers for defoaming aqueous media, according to any of Claims 1 to 8, where c is from 2 to 5.

11. Use of water-insoluble polyoxyalkylene-polysiloxane block copolymers for defoaming aqueous media, according to any of Claims 1 to 10, **characterized in that** emulsifiers are added to the defoamer.

12. Use of water-insoluble polyoxyalkylene-polysiloxane block copolymers for defoaming aqueous media, according to any of Claims 1 to 11, **characterized in that** solids are present in the defoamers.

13. Use of water-insoluble polyoxyalkylene-polysiloxane block copolymers for defoaming aqueous media, according to any of Claims 1 to 12, in the form of aqueous emulsions.

14. Use of water-insoluble polyoxyalkylene-polysiloxane block copolymers, according to any of Claims 1 to 13, for defoaming cooling lubricants.

15. Use of water-insoluble polyoxyalkylene-polysiloxane block copolymers, according to any of Claims 1 to 13, for defoaming polymer dispersions.

16. Use of water-insoluble polyoxyalkylene-polysiloxane block copolymers, according to any of Claims 1 to 13, for defoaming coating materials and printing inks.

## Revendications

1. Utilisation de copolymères à blocs de polyoxyalkylène-polysiloxane insolubles dans l'eau comme anti-mousse pour milieux aqueux, de formule générale moyenne I 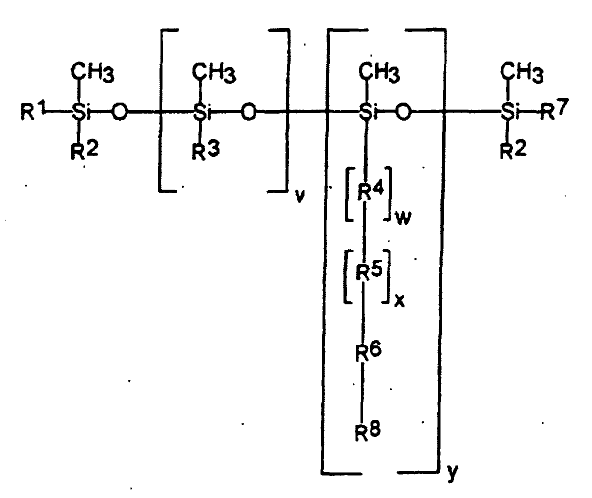 où
R¹ et/ou R⁷ représentent R² ou -[R⁴]_{w}- [R⁵]ₓ- [R⁶] - R⁸,
R² et R³ représentent des radicaux alkyle identiques ou différents comprenant 1 à 24 atomes de carbone ou des radicaux phényle le cas échéant substitués comprenant jusqu'à 24 atomes de carbone,
R⁴ représente un radical divalent de formule -O-, - NH-, -NR²-, -S- ou de formule -[O-Si(CH₃)₂]ᵤ-, où u = 2 à 200,
R⁵ représente des radicaux alkylène identiques ou différents comprenant 1 à 24 atomes de carbone ou -CₙH₂ₙ-_{f}R²_{f}-O-CₘH_{2m-g}R²_{g}- où
f = 0 à 12,
g = 0 à 12,
n = 1 à 18,
m = 1 à 18,
R⁶ représente des radicaux identiques ou différents de formule générale -O-(C₂H₄O)ₐ(CH₂-CH (CH₃)O)_{b}(CH₂-CR⁹R¹⁰O)_{c}-, où
R⁹ et R¹⁰ représentent un radical méthyle ou
R⁹ signifie un atome d'hydrogène et R¹⁰ signifie un radical éthyle, en ne dépassant toutefois pas une teneur de 40% en poids, par rapport à tous les radicaux R⁶, en groupements C₂H₄O dans la somme de tous les radicaux R⁶,
a = 2 à 30,
b = 2 à 50,
c = 2 à 40,
la somme (a + b + c) = 6 à 100
et l'ordre des différents segments polyalkylène -(C₂H₄O)ₐ- et -(CH₂-CH(CH₃)O)_{b}- et -(CH₂-CR⁹R¹⁰O)_{c}-peut être quelconque et comprend en particulier des copolymères à blocs, tels que des polymères statistiques ainsi que leurs combinaisons,
R⁸ représente un radical hydrogène, un radical alkyle éventuellement substitué comprenant 1 à 6 atomes de carbone ou un radical acyle,
v = 3 à 200,
w = 0 ou 1,
x = 0 ou 1,
y = 0 à 200,
et, lorsque y = 0, R¹ et/ou R⁷ représentent - [R⁴]_{w}- [R⁵]ₓ- [R⁶] - R⁸.

2. Utilisation de copolymères à blocs de polyoxyalkylène-polysiloxane insolubles dans l'eau comme anti-mousse pour milieux aqueux selon la revendication 1, où
au moins 80% des groupes R² et R³ sont des groupes méthyle,
R¹ = R⁷ et
la somme v + y = 8 à 120.

3. Utilisation de copolymères à blocs de polyoxyalkylène-polysiloxane insolubles dans l'eau comme anti-mousse pour milieux aqueux selon les revendications 1 et 2, où les différentes unités polyoxyalkylène sont disposées en blocs.

4. Utilisation de copolymères à blocs de polyoxyalkylène-polysiloxane insolubles dans l'eau comme anti-mousse pour milieux aqueux selon les revendications 1 à 3, où les unités poly(oxy-1,2-butanediyle) sont disposées en blocs de manière immédiatement adjacente à R⁸.

5. Utilisation de copolymères à blocs de polyoxyalkylène-polysiloxane insolubles dans l'eau comme anti-mousse pour milieux aqueux selon les revendications 1 à 3, où
R¹ = R⁷ = -CH₃,
R⁵ = -(CH₂)₃-,
w = 0 et
x = 1.

6. Utilisation de copolymères à blocs de polyoxyalkylène-polysiloxane insolubles dans l'eau comme anti-mousse pour milieux aqueux selon les revendications 1 à 3, où
R¹ = R⁷= (CH₂)₃-R⁶-R⁸,
R⁵ = -(CH₂)₃-,
w = 0 et
x = 1.

7. Utilisation de copolymères à blocs de polyoxyalkylène-polysiloxane insolubles dans l'eau comme anti-mousse pour milieux aqueux selon les revendications 1 à 3, où
R¹ = R⁷ = (CH₂)₃-R⁶-R⁸ et
y = 0.

8. Utilisation de copolymères à blocs de polyoxyalkylène-polysiloxane insolubles dans l'eau comme anti-mousse pour milieux aqueux selon les revendications 1 à 3, où
R¹ = R⁷ = (CH₂)₃-R⁶-R⁸,
R⁴ = -[O-Si(CH₃)₂]ᵤ-,
R⁸ = un radical alkyle non ramifié,
u = 2 à 6,
w = 1,
x = 0 et
y = 1 à 6.

9. Utilisation de copolymères à blocs de polyoxyalkylène-polysiloxane insolubles dans l'eau comme anti-mousse pour milieux aqueux selon les revendications 1 à 3, où
R¹ = R⁷ = - (CH₂)₃-R⁶-R⁸,
R⁸ = un radical alkyle non ramifié et
y = 0.

10. Utilisation de copolymères à blocs de polyoxyalkylène-polysiloxane insolubles dans l'eau comme anti-mousse pour milieux aqueux selon les revendications 1 à 8, où c = 2 à 5.

11. Utilisation de copolymères à blocs de polyoxyalkylène-polysiloxane insolubles dans l'eau comme anti-mousse pour milieux aqueux selon les revendications 1 à 10, **caractérisée en ce que** des émulsifiants sont ajoutés à l'anti-mousse.

12. Utilisation de copolymères à blocs de polyoxyalkylène-polysiloxane insolubles dans l'eau comme anti-mousse pour milieux aqueux selon les revendications 1 à 11, **caractérisée en ce que** des solides sont ajoutés à l'anti-mousse.

13. Utilisation de copolymères à blocs de polyoxyalkylène-polysiloxane insolubles dans l'eau comme anti-mousse pour milieux aqueux selon les revendications 1 à 12 sous forme d'émulsions aqueuses.

14. Utilisation de copolymères à blocs de polyoxyalkylène-polysiloxane insolubles dans l'eau selon les revendications 1 à 13 comme anti-mousse pour lubrifiants à froid.

15. Utilisation de copolymères à blocs de polyoxyalkylène-polysiloxane insolubles dans l'eau selon les revendications 1 à 13 comme anti-mousse pour dispersions polymères.

16. Utilisation de copolymères à blocs de polyoxyalkylène-polysiloxane insolubles dans l'eau selon les revendications 1 à 13 comme anti-mousse pour laques et encres d'imprimerie.
